(19) Europäisches Patentamt / European Patent Office / Office européen des brevets

(11) **EP 2 909 510 B1**

(12) **EUROPÄISCHE PATENTSCHRIFT**

(45) Veröffentlichungstag und Bekanntmachung des Hinweises auf die Patenterteilung:
**21.12.2022  Patentblatt 2022/51**

(21) Anmeldenummer: **13826594.7**

(22) Anmeldetag: **17.10.2013**

(51) Internationale Patentklassifikation (IPC):
***F16H 49/00*** *(2006.01)*

(52) Gemeinsame Patentklassifikation (CPC):
**F16H 49/001**

(86) Internationale Anmeldenummer:
**PCT/IB2013/059408**

(87) Internationale Veröffentlichungsnummer:
**WO 2014/060974 (24.04.2014 Gazette 2014/17)**

(54) **ZAHNGEOMETRIEN FÜR EINEN HARMONIC-PIN-RING-ANTRIEB**

TOOTH GEOMETRIES FOR A HARMONIC PIN RING DRIVE

GÉOMÉTRIE DES DENTS D'UN DÉMULTIPLICATEUR HARMONIQUE À ANNEAU À BROCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2012   PCT/IB2012/055687**

(43) Veröffentlichungstag der Anmeldung:
**26.08.2015   Patentblatt 2015/35**

(73) Patentinhaber: **TQ-Systems GmbH**
**82229 Seefeld (DE)**

(72) Erfinder: **ROSSBERGER, Antonius Georg**
**82404 Sindelsdorf (DE)**

(74) Vertreter: **Schweiger, Martin**
**Patentanwalt**
**Martin Schweiger**
**Erhardtstraße 12**
**80469 München (DE)**

(56) Entgegenhaltungen:
EP-A1- 0 168 152     WO-A2-2012/046216
DE-A1- 1 750 279     US-A- 2 210 240
US-A- 4 850 237

**Beschreibung**

Die vorliegende Anmeldung beschreibt unter anderem ein neuartiges Pin-Ring-Getriebe, einen Innenring und einen Außenring für ein solches Getriebe sowie ein Zahnprofil, das für dieses Getriebe geeignet ist. Das neuartige Pin Ring Getriebe wird im Folgenden auch als "Harmonic-Pin-Ring-Drive" bezeichnet.

Die US 2009/0139358 offenbart eine Methode zum Erstellen eines Zahnprofils für einen flachen Harmonie Drive bzw. ein Wellgetriebe mit einer flexiblen inneren Verzahnung und einer starren äußeren Verzahnungen. Ein Zahnform für die innere Verzahnung wird vorgegeben und davon ausgehend ein Profil für die äußere Verzahnung bestimmt.

Die gattungsgemäße WO 2012/046261 zeigt in Abbildung 37 einen Querschnitt eines Harmonic-Pin-Ring Getriebes. Der Querschnitt zeigt, wie ein Pinring von zwei exzentrisch angeordneten Scheiben in ein Außenrad und in ein Innenrad gerakelt wird. Die WO 2012/046261 offenbart jedoch nicht, dass jeder der Pins im Eingriff mit der Innenverzahnung des Außenrings oder im Eingriff mit der Außenverzahnung des Innenrings ist und wobei jeder Pin zu jedem Zeitpunkt mit einem Zahn der Innenverzahnung oder mit einem Zahn der Außenverzahnung in Berührung ist, wobei ein Abstand von zwei radial gegenüberliegenden Zahngründen ungefähr einem doppelten Umfang der Pins entspricht.

Die DE 1750279A zeigt ein Untersetzungsgetriebe, bei dem eine Rollenkette von einer Nockenscheibe in ein inneres Kettenrad und in ein äußeres Kettenrad gerakelt wird.

Die US 2,210,240A zeigt ein Getriebe mit einer variabel einstellbaren Übersetzung, bei der zur variablen Einstellung der Übersetzung eine Kette von einem exzentrisch angeordneten Ring in ein inneres Radelement und in ein äußeres Radelement gerakelt wird.

Die vorliegende Anmeldung offenbart ein Harmonic-Pin-Ring Getriebe mit Hohlwellenbauform, das mindestens einen Innenring mit Außenverzahnung und mindestens einen Außenring mit Innenverzahnung aufweist, sowie einen Pin-Ring mit Pins, die einen kreisförmigen Querschnitt aufweisen und einen als Hohlwelle ausgebildeten Rotor mit einem Transmitter zum Rakeln der Pins des Pin-Rings in die Zähne des Außenrings und in die Zähne des Innenrings. Der Transmitter ist als ein Flansch des Rotors ausgebildet. Der Innenring, der Rotor und der Außenring sind konzentrisch zueinander angeordnet und der Transmitter ist innerhalb des Pinrings angeordnet.

Der Pinring ist zwischen dem Innenring und dem Außenring angeordnet, wobei der Transmitter den Pinring so verformt, dass sich der Außenring und der Innenring relativ zueinander drehen. Die Form der Zähne des Außenrings und die Form der Zähne des Innenrings ist im Wesentlichen durch die Hüllkurve der sich dabei bewegenden Pins festgelegt, wobei jeder der Pins im Eingriff mit der Innenverzahnung des Außenrings oder im Eingriff mit der Außenverzahnung des Innenrings ist. Jeder Pin ist zu jedem Zeitpunkt mit einem Zahn der Innenverzahnung oder mit einem Zahn der Außenverzahnung in Berührung, wobei ein Abstand von zwei radial gegenüberliegenden Zahngründen ungefähr einem doppelten Umfang der Pins entspricht.

Der Transmitter kann ebenfalls zwischen dem Innenring und dem Außenring angeordnet sein. Die Pins des Pinrings können abwechselnd in die Zähne des Innenrings und in die Zähne des Außenrings gedrückt werden.

Das Harmonic-Pin-Ring Getriebe kann des Weiteren einen dreireihigen Aufbau mit einem ersten Zahnrad-Paar aus Innenring und Außenring und einem zweiten Zahnrad-Paar aus Innenring und Außenring aufweisen, wobei das erste und das zweite Zahnrad-Paar in voneinander verschiedenen ersten und zweiten Ebenen angeordnet sind, und wobei ein Transmitterträger mit einem Transmitter in einer dritten Ebene zwischen der Ebene des ersten Zahnrad-Paars und der Ebene des zweiten Zahnrad-Paars angeordnet ist. Hierbei kann der Transmitterträger insbesondere ein Rotor und der Transmitter kann insbesondere ein elliptisch ausgeformter Rotorflansch sein.

Dieses Harmonie Pin-Ring Getriebe ist auf Grund verschiedener Eigenschaft wie der Größe der Pins, der Zahnform und dem Abstand zwischen Innen und Außenrad besonders gut zur Übertragung großer Drehmomente geeignet.

Insbesondere kann der Abstand zwischen Innen- und Außenrad und die Pingröße so dimensioniert sein, dass der Scheitelpunkt eines Pin-Mittelpunkts eines Pins bei der Bewegung des Pins von einem Zahngrund in einen benachbarten Zahngrund einer Zähnung des Innen- oder Außenrings im Wesentlichen auf einem Teilkreis der jeweils gegenüberliegenden Zähnung liegt. Dies bewirkt, dass der Pin schon wieder in den einen Zahngrund einer gegenüberliegenden Zähnung eingreift, wenn der Pin sich auf einem Scheitelpunkt der Pintrajektorie zwischen zwei Zahngründen einer Zähnung befindet.

Zur Aufnahme der Pins, die einen kreisförmigen Querschnitt haben, kann der Querschnitt der Zahngründe die Form eines Kreisausschnitts haben und zwar insbesondere halbkreisförmig sein. Gemäß einem Ausführungsbeispiel laufen die Zahnflanken senkrecht zum Teilkreis der jeweiligen Zähnung in den Zahngrund ein. Durch die steilen Zahnflanken ist ein guter seitlicher Halt zur Drehmomentübertragung gegeben. Zudem entsteht so bei halbkreisförmigem Zahngrund kein Knick.

Insbesondere kann das Getriebe so ausgeformt sein, dass die Pin-Trajektorie eines Pin-Mittelpunkts eines Pins bei der Bewegung des Pins von einem Zahngrund in einen benachbarten Zahngrund durch einen Ellipsenabschnitt gegeben ist, insbesondere eine Halbellipse, wobei der Ellipsenabschnitt von einer kleinen Halbachse zu einer gegenüberliegenden kleinen Halbachse der Ellipse verläuft. Aus dieser Bahnform ergibt sich die Zahnform einer Zähnung durch die Hüllkurve der Pins, wie oben beschrieben.

In einem weiteren Ausführungsbeispiel ist die Pin-Trajektorie eines Pin-Mittelpunkts eines Pins bei der Bewegung des Pins von einem Zahngrund in einen benachbarten Zahngrund durch einen Ausschnitt einer sinusüberlagerten Kreisform gegeben, insbesondere durch die Hälfte einer sinusüberlagerten Kreisform, die von einer kleinen Halbachse zu einer gegenüberliegenden Halbachse der sinusüberlagerten Kreisform verläuft.

In einem weiteren Ausführungsbeispiel ist die Pintrajektorie eines Pin-Mittelpunkts eines Pins bei der Bewegung des Pins von einem Zahngrund in einen benachbarten Zahngrund in Wesentlichen durch eine entlang einer Winkelkoordinate gestauchten Form des Transmitters gegeben ist, wobei der Stauchungsfaktor insbesondere $Z/2$ betragen kann, wobei $Z$ die Anzahl der Zähne ist. Die Winkelkoordinate ist dabei bezüglich einer Polarkoordinatendarstellung relativ zu einem Mittelpunkt des Transmitters/Rotors zu verstehen.

Des Weiteren kann der Fußkreis der Zähne des Innenrads von dem Fußkreis der Zähne des Außenrads im Wesentlichen um den doppelten Umfang der Pins entfernt sein, so dass ein guter Eingriff der Pins in die Zähnung gewährleistet wird.

Des Weiteren offenbart die vorliegende Anmeldung einen Innenring mit einer Außenverzahnung der für ein Harmonic Pin Ring Getriebe geeignet ist, das die folgenden Eigenschaften hat: Das Getriebe weist einen Pin-Ring mit Pins auf, die einen kreisförmigen Querschnitt aufweisen, einen Rotor mit einem Transmitter zum Rakeln der Pins des Pin-Rings in die Zähne des Innenrings, wobei der Innenring und der Rotor konzentrisch zueinander angeordnet sind. Der Transmitter ist innerhalb des Pinrings angeordnet, wobei der Transmitter den Pinring so verformt, dass sich der Innenring relativ zu einem Außenring dreht, der konzentrisch zu dem Innenring angeordnet ist.

Der Innenring weist in regelmäßigen Abständen angeordnete Zahngründe mit kreisabschnittsförmigem Profil auf, sowie zwischen den Zahngründen angeordnete Zähne mit symmetrischem Profil, wobei die Form der Zähne im Wesentlichen durch die Hüllkurve der sich dabei bewegenden Pins festgelegt ist. Dabei soll ein vorgegebener Abstand der Zahnoberfläche zur Hüllkurve nicht unterschritten werden, so dass die Zahnform im Wesentlichen der Hüllkurve folgt.

Insbesondere kann das Profil der Zahngründe des Innenrings die Form eines Halbkreises haben und die Zahnflanken können senkrecht zum Teilkreis der Zähnung in den Zahngrund einlaufen.

In ähnlicher Weise offenbart die vorliegende Anmeldung einen Außenring mit einer Außenverzahnung, das für ein Harmonic Pin Ring Getriebe geeignet ist, das die folgenden Eigenschaften aufweist: Das Getriebe weist einen Pin-Ring mit Pins auf, die einen kreisförmigen Querschnitt aufweisen, sowie einen Rotor mit einem Transmitter zum Rakeln der Pins des Pin-Rings in die Zähne des Innenrings. Der Außenring und der Rotor sind konzentrisch zueinander angeordnet sind, der Transmitter ist innerhalb des Pinrings angeordnet, wobei der Transmitter den Pinring so verformt, dass sich der Außenring relativ zu einem Innenring dreht, der konzentrisch zu dem Außenring angeordnet ist.

Der Außenring weist in regelmäßigen Abständen angeordnete Zahngründe mit kreisabschnittsförmigem Profil aufweist, sowie zwischen den Zahngründen angeordnete Zähne mit symmetrischem Profil, wobei die Form der Zähne im Wesentlichen durch die Hüllkurve der sich dabei bewegenden Pins festgelegt ist.

Insbesondere kann das Profil der Zahngründe die Form eines Halbkreises haben und die Zahnflanken können senkrecht zum Teilkreis der jeweiligen Zähnung in den Zahngrund einlaufen.

Der Harmonic-Pin-Ring-Drive (HPRD) gemäß der vorliegenden Anmeldung ist ein spezielles, rotationssymmetrisch aufgebautes Getriebe, das sich insbesondere durch folgende Merkmale auszeichnet:

- sehr hohe Leistungsdichte, dadurch kleiner Bauraum
- Steifigkeit
- mit sehr geringem Spiel
- sehr große Bandbreite hinsichtlich Unter- bzw. Übersetzungen
- Hohlwellenbauform möglich

Diese Getriebe können sowohl einstufige als auch mehrstufige Drehzahländerungen abbilden und können als Ausgleichsgetriebe verwendet werden. Des Weiteren sind auch Drehrichtungsänderungen und Schaltungen möglich.

Der Gegenstand der Anmeldung wird untenstehend unter Bezugnahme auf die folgenden Figuren weiter erläutert.

Figur 1    zeigt eine Explosionsansicht eines HPRD Getriebes,
Figur 2    zeigt eine Aufsicht auf das Getriebe von Fig. 1,
Figur 3    zeigt einen Querschnitt durch das Getriebe von Fig.1,
Figur 4    zeigt eine Seitenansicht eines Pin-Rings und eine Ausschnittvergrößerung davon,

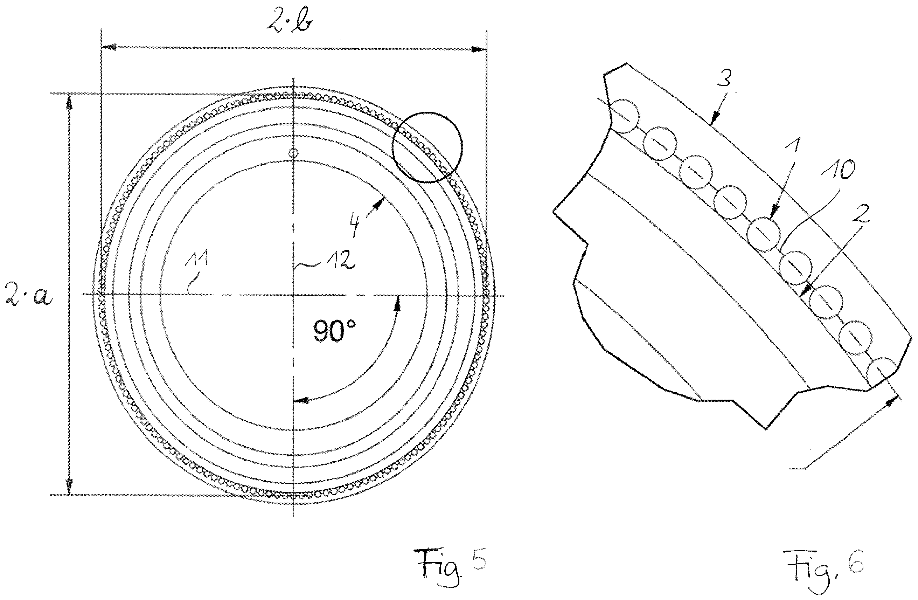

Figur 5    zeigt eine Pin-Laufbahn eines HPRD Getriebes,
Figur 6    zeigt einen vergrößerten Ausschnitt von Fig. 5,
Figur 7    zeigt einen Querschnitt durch ein HPRD mit Umlenkrollen,
Figur 8    zeigt eine Aufsicht auf das HPRD mit Umlenkrollen,

Figur 9     zeigt eine erste Zahngeometrie einer inneren Verzahnung,
Figur 10    zeigt eine erste Zahngeometrie einer äußeren Verzahnung,
Figur 11    zeigt einen Bewegungsablauf der Pins,
Figur 12    zeigt eine Pin-Trajektorie gemäß einer zweiten Zahngeometrie einer Verzahnung,
Figur 13    zeigt die zweite Zahngeometrie der Verzahnung, und
Figur 14    illustriert eine Methode zur Bestimmung eine Getriebegeometrie.

Ein Transmitter, der ein Zugmittel in ein Außenrad bzw. Außenring oder Innenrad bzw. Innenring rakelt, ist in der vorliegenden Anmeldung durch einen Flansch eines Rotors verwirklicht. Dem Außenrad entsprechen ein oder mehrere Ringe bzw. Scheiben mit einer als Innenverzahnung ausgeführten äußeren Verzahnung. Dem Innenrad entsprechen ein oder mehrere Ringe bzw. Scheiben mit einer als Außenverzahnung ausgeführten inneren Verzahnung. Dem Zugmittel entspricht ein Pinring.

Im Folgenden ist mit "Antriebsseite" die Seite gemeint, von der aus der Rotor 13 angetrieben wird und mit "Abtriebsseite" die der Antriebsseite gegenüberliegende Seite.

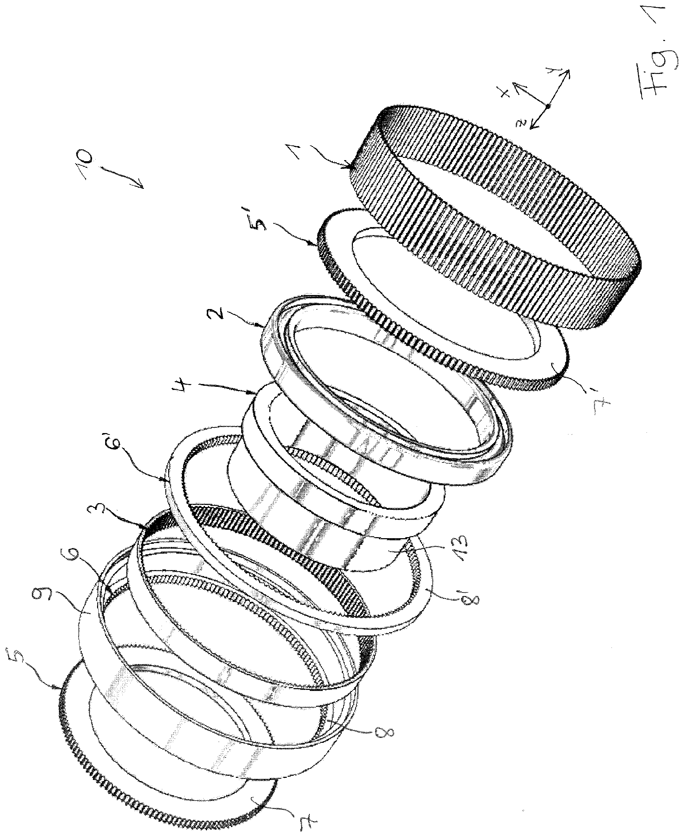

Figur 1 zeigt einen Harmonic Pin Ring Drive (HPRD) 10 gemäß der Anmeldung. Der HPRD weist einen Rotor 13 auf der über ein hier nicht gezeigtes Kugellager auf einem Gehäuse abgestützt ist. Ein Außenring 8 eines zylindrisches Gehäuseteil 9, das konzentrisch außerhalb des Rotors 13 angeordnet ist, weist eine erste als Innenverzahnung ausgeformte äußere Verzahnung 6 auf einer ersten Seite auf. Eine zweite als Innenverzahnung ausgeformte äußere Verzahnung 6' ist auf einem zweiten Außenring ausgeformt, der auf einer der ersten Seite gegenüberliegenden Seite in das zylindrische Gehäuseteil 9 eingesetzt ist.

Eine als Außenverzahnung ausgeführte erste innere Verzahnung 5 ist auf einer Peripherie eines Innenrings 7 ausgeformt und konzentrisch innerhalb der ersten äußern Verzahnung 6 angeordnet. In ähnlicher Weise ist eine als Außenverzahnung ausgeführte zweite innere Verzahnung 5' auf einer Peripherie eines zweiten Innenrings 7' ausgeformt und konzentrisch innerhalb der zweiten äußeren Verzahnung 6' angeordnet

Die innere Verzahnung 5, 5' und die äußere Verzahnung 6, 6' sind konzentrisch zu einer Getriebemittelachse angeordnet, wobei die innere Verzahnung 5, 5' um die Getriebemittelachse rotierbar ist. In anderen Ausführungsbeispielen kann die äußere Verzahnung 6, 6' oder auch die äußere und die innere Verzahnung um die Getriebemittelachse rotierbar sein, je nachdem über welche Verzahnung der Abtrieb oder, bei einer Übersetzung, der Antrieb erfolgt.

Ein flexibles Dünnring-Kugellager 2 ist auf einem speziell ausgeformten Flansch 4 des Rotors 13 aufgespannt. Der Flansch kann beispielsweise als Oval oder als sinusüberlagerte Kreisform ausgeformt sein. Ein flexibler Pin-Haltering 3 ist zwischen dem flexiblen Dünnring-Kugellager 2 und der äußeren Verzahnung 6, 6' angeordnet. Der flexible Pin-Haltering 3 weist an einer Innenseite Rillen zur Aufnahme von Pins 1 auf, die auf dem Pin-Haltering 3 in gleichmäßigen Abständen angeordnet und durch den Pin-Haltering 3 starr gehalten sind.

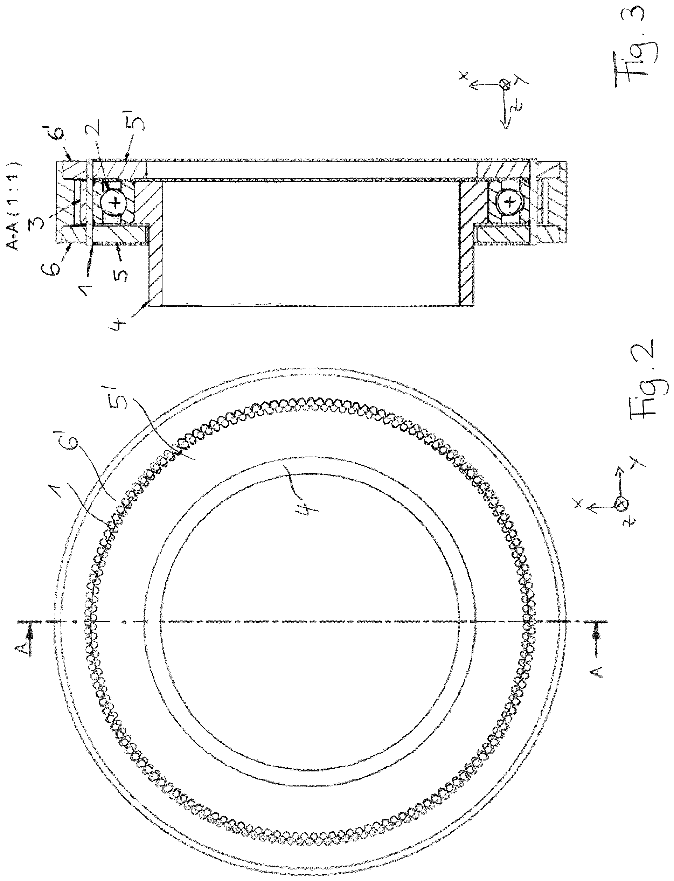

Fig. 2 zeigt eine Aufsicht auf das HPRD 10 von einer Abtriebsseite her und Fig. 3 zeigt einen Querschnitt durch den HPRD 10 entlang der Querschnittline A-A.

Die erste innere Verzahnung 5 ist durch ein Kugellager auf dem Rotor 13 abgestützt, dass der Einfachheit halber in Fig. 2 und 3 nicht gezeigt ist. Die zweite innere Verzahnung 5' ist an hier ebenfalls nicht gezeigte Abtriebsachse befestigt, die nach außen über Kugellager abgestützt ist. Die äußere Verzahnung 6, 6' ist stationär an einem hier nicht gezeigten Gehäuse befestigt.

Gemäß einer anderen Ausführungsform ist die innere Verzahnung 5, 5' stationär während die äußere Verzahnung 6, 6' einen Abtrieb bildet. Gemäß einer weiteren Ausführungsform bilden sowohl die innere Verzahnung 5, 5' als auch die äußere Verzahnung 6, 6' je einen Abtrieb.

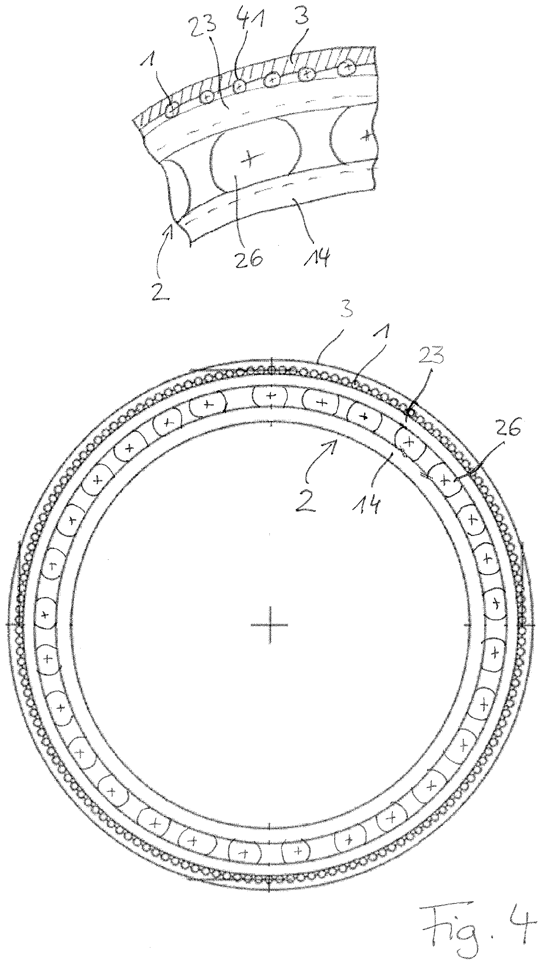

Figur 4 zeigt das flexible Kugellager 2 und den Pin-Haltering 3 mit den Pins 1. Der Pin-Haltering zusammen mit den Pins 1 wird auch als Pin-Ring bezeichnet. Das flexible Dünnring-Kugellager weist einen flexiblen Innenring 14, einen flexiblen Außenring 23 und dazwischen angeordnete Kugeln 26 auf.

Die Pins 1 sind in Aufnahmerillen 41 des Pin-Halterings 3 eingesetzt und werden durch den Anpressdruck des Pin-Halterings 3 gegen das Dünnring-Kugellager 2 festgehalten. Ein manueller Zusammenbau kann zum Beispiel so erfolgen, dass zuerst der Pin-Haltering um das Dünnring-Kugellager 2 herumgelegt wird. Anschließend werden an weit auseinanderliegenden Positionen Pins 1 eingesteckt, so dass der Abstand zwischen Dünnring-Kugellager 2 und Pin-Haltering 3 definiert wird. Anschließend werden die restlichen Pins in die Zwischenräume eingefüllt.

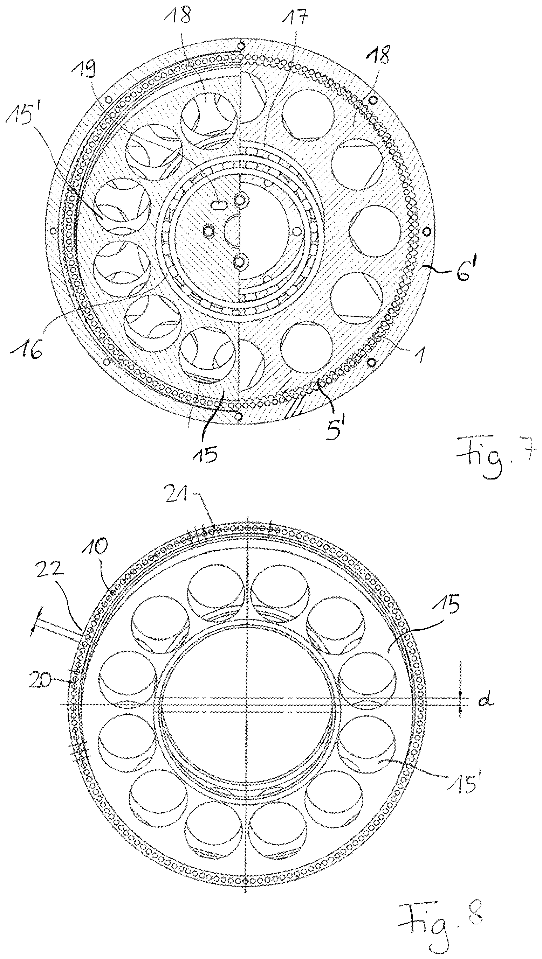

Die Figuren 7 und 8 illustrieren eine Pin-Laufbahn 10 und daraus abgeleitete Beziehungen. Von der Pin-Laufbahn 10 zu unterscheiden ist die Pintrajektorie, die die Bewegung eines einzelnen Pins in einem vorher festgelegten Bezugssystem bezeichnet. Für ein mit dem Rotor 4 mitrotierendes Bezugssystem verläuft die Pintrajektorie entlang der Pin-Laufbahn 10. In den Figuren 7 und 8 sind aus Gründen der Übersichtlichkeit die Zähnungen nicht gezeigt.

Legt man eine Bahn durch die Mittelachsen aller Pins (2), entsteht die Pin-Laufbahn 10. Diese Bahn besitzt rechtwinklig versetzt eine kleine Achse 11 der Länge 2b und eine große Achse 12 der Länge 2a. Bei einer Ellipsenform des Transmitters ist a die Länge der kleinen Halbachse und b die Länge der großen Halbachse der Ellipse.

Die kleine Achse und die große Achse bilden die Basis der Teilkreise der Verzahnungen 5, 5' und 6, 6', wobei die kleine Achse einem Durchmesser eines Teilkreises der inneren Verzahnung 5, 5' und die große Achse einem Durchmesser eines Teilkreises der äußeren Verzahnung 6 entspricht. Bei dem HPRD verläuft der Teilkreis einer Zähnung durch die Flankenlinien, die die Zahnflanken von dem Zahngrund abgrenzen. Unter Annahme bestimmter Zahnformen der Verzahnungen 5, 5' und 6, 6' lässt sich nun die Getriebefunktion abbilden.

Hält man beispielsweise die Innenverzahnung 5, 5' statisch und dreht den Rotor 13, so entsteht eine Wellenbewegung der Anordnung der Pins 1. Daraus resultiert eine Relativbewegung der äußeren Verzahnung 6, 6', welche sich in gleicher Drehrichtung relativ zu dem Rotor 13 untersetzt dreht. Hält man die äußere Verzahnung 6, 6' statisch, dreht sich die innere Verzahnung 5, 5' entgegengesetzt und untersetzt zum Rotor 13.

Die Anzahl aller Pins 1 muss um zwei mehr als Anzahl der Zähne der inneren Verzahnung 5, 5', bzw. um zwei weniger als die Anzahl der Zähne der äußeren Verzahnung 6, 6' sein. Die Zahndifferenz der Verzahnungen 5, 5' und 6, 6' ist somit vier. Grundsätzlich wären auch Zahndifferenzen eines Vielfachen von vier möglich.

Im den folgenden Gleichungen (1) - (3) bezeichnet R die Umlaufperiode des Rotors 13, F die Umlaufperiode des Flexabtriebs 7, A die Umlaufperiode des Außenrads, I die Umlaufperiode des Innenrads, Zi die Anzahl der Zähne der Innenverzahnung 5, 5', Za die Anzahl der Zähne der äußeren Verzahnung 6, 6'. Gemäß der Gleichungen (1) - (3) sich die Drehzahluntersetzungen zwischen den einzelnen Komponenten wie folgt zusammen:

Wenn das Innenrad stationär gehalten wird, gilt

$$A/R = Za/(Za-Zi) \quad bzw. \quad F/R = 2*(Za/(Za-Zi)) \qquad (1)$$

Hierbei drehen sich alle Elemente gleichläufig.

Wenn das Außenrad stationär gehalten wird, gilt

$$I/R = Zi/(Za-Zi) \quad bzw. \quad F/R = 2*(Zi/(Za-Zi)) \qquad (2)$$

Hierbei drehen sich das Innenrad und der Flexring gegenläufig zum Rotor.

Wenn der Flexring stationär gehalten wird, gilt

$$A/R = 2*(Za/(Za-Zi)) \quad bzw. \quad I/R = 2*(Zi/(Za-Zi)) \quad (3)$$

Hierbei drehen sich das Innenrad gegenläufig und das Außenrad gleichläufig zum Rotor.

Im Folgenden nun eine Beispielberechnung zu den möglichen Untersetzungsstufen, wobei in diesem Fall der Rotor 13 immer die Eingangsdrehzahl vorgibt. Die Zähnezahl der Innenverzahnung sei 156 und die Zähnezahl der Außenverzahnung sei 160, woraus sich die Anzahl der Pins zu 158 ergibt.

Wenn das Innenrad stationär gehalten wird, gilt

$$A/R = 160/(160-156) = 40 \quad bzw. \quad F/R = 2*(160/(160-156)) = 80$$

Wenn das Außenrad stationär gehalten wird, gilt

$$I/R = 156/(160-156) = 39 \quad bzw. \quad F/R = 2*(156/(160-156)) = 78$$

Wenn der Flexring stationär gehalten wird, gilt

$$A/R = 2*(160/(160-156)) = 80 \quad bzw. \quad I/R = 2*(156/(160-156)) = 78$$

Es gibt verschiedene Möglichkeiten, die Pin-Laufbahn zu definieren. Grundsätzlich besitzt jede Pin-Laufbahn, wie oben beschrieben, jeweils rechtwinklig versetzt eine kleine Achse x und eine große Achse y, deren Verhältnis dem der Zähnezahlen der Verzahnungen 5, 5' und 6, 6' entspricht.

$$Somit \ gilt \quad x/y = Zi/Za$$

Des Weiteren muss die Teilung der in den Pin-Haltering 3 eingesetzten Anordnung der Pins 1 der Teilung der Verzahnungen 5, 5' und 6, 6' entsprechen. Die Pin-Laufbahn ist somit auch über ihre Bogenlänge definiert. Für die Bogenlänge s jeder beliebigen Pin-Laufbahn gilt:

$$s = \text{Anzahl Pins } 1 * \text{Teilung}$$

Der Umfang der Pin-Laufbahn abzüglich des Umfangs eines Pins 1 muss also exakt dem Umfang des Kugellagers 2 entsprechen.

Im Folgenden werden drei Laufbahnvarianten dargestellt:

1. Die Elliptische Laufbahn wird durch ihre beiden Halbachsen definiert, wobei die kleine Halbachse dem Teilkreisradius der Innenverzahnung 5, 5' und die große Halbachse dem Teilkreisradius der Außenverzahnung 6, 6' entspricht

2. Die sinusüberlagerte Kreisform ist der elliptischen Laufbahn sehr ähnlich und unterscheidet sich bei kleinen Achsunterschieden nur äußerst gering von dieser. Sie ist folgendermaßen definiert: Die Mittelachse eines kleinen Kreises mit Durchmesser gemäß dem halben Wert der Differenz aus große Achse minus kleine Achse rotiert auf der großen Kreisbahn des Mittelkreises zwischen den beiden Teilkreisen der Verzahnungen 5, 5' und 6, 6' und dreht sich dabei während eines Umlaufs um die Getriebemittelachse zweimal um seine eigene Achse. Projiziert man einen Punkt des kleinen Kreises und leitet daraus eine Bahn ab, entsteht die sinusüberlagerte KreisForm.

3. Die Doppelexzenter-Laufbahn ist eine Sonderform, die beispielsweise eingesetzt werden kann, wenn ein elastisches Verformen des Kugellagers 2 unerwünscht oder aufgrund eines zu großen Unterschiedes der beiden Achsen der Pin-Laufbahn nicht mehr möglich ist. In diesem Fall wird die Anordnung der Pins 1 über zwei Umlenkrollen vom Teilkreis der Innenverzahnung 5, 5' in den Teilkreis der Außenverzahnung 6, 6' gelenkt. Die Drehachsen der beiden Umlenkrollen befinden sich bezüglich einer gedachten Ellipse symmetrisch zur kleinen Achse auf der großen Achse.

Die Figuren 7 und 8 zeigen eine Aufsicht auf zwei Ausführungsformen eines HPRD mit Umlenkrollen 15, 15'. In Figur 7 ist die Schnittebene in der rechten Hälfte nach hinten versetzt, so dass die Verzahnungen 5', 6' sichtbar werden.

In Fig. 8 ist weiterhin ein Kugellager 16 gezeigt, auf dem die Umlenkrolle 15 gelagert ist und ein Kugellager 17, auf dem eine Scheibe 18 gelagert ist, die die Innenverzahnung 5 aufweist. Weiterhin sind länglich ausgeformte Stellschlitze 19 gezeigt. Durch ein Verschieben entlang der Stellschlitze 19 können die Umlenkrollen 15, 15' gespannt werden.

An eine, inneren Berührbereich 20 liegt die Pinlaufbahn 10 an einem Teilkreis der inneren Verzahnung 5 an und an einem äußeren Berührbereich liegt die Pinlaufbahn 10 an einem Teilkreis der äußeren Verzahnung 6 an. In einem Zwischenbereich 22 ist die Pinlaufbahn 10 annähernd gerade. Insgesamt gibt es zwei innere Berührbereiche 20, zwei äußere Berührbereiche 21 und vier Zwischenbereiche, so dass sich die Pinlaufbahn aus vier kreisabschnittsförmigen und vier geraden Bereichen zusammensetzt. Diese Pinlaufbahn 10 wird auch als Doppelexzenter-Pinlaufbahn 10 bezeichnet.

Die Umlenkrollen 15, 15' sind um eine Drehachse durch ihren Mittelpunkt drehbar gelagert. Das Lager der Umlenkrollen nimmt an Stelle des oben beschriebenen flexiblen Kugellagers den Schlupf des Pinrings gegenüber dem Rotor 13 auf. Die Drehachsen der Umlenkrollen 15, 15' sind exzentrisch zur Mittelachse angeordnet. Der exzentrische Versatz d ist in Figur 8 gezeigt.

Es ist vorteilhaft, den Radius der Umlenkrollen möglichst groß zu wählen, um eine große Kontaktfläche zum Pinring und damit eine gleichmäßige Kraftverteilung zu erreichen. Gemäß der Anmeldung können die Umlenkrollen flach gebaut sein und Aussparungen aufweisen, um das Gewicht der Umlenkrollen gering zu halten.

Statt der Umlenkrollen können auch zwei Rakel mit Rollen an der Oberfläche der Rakel verwendet werden, wobei das Rakel starr an dem Rotor 13 befestigt ist. Insbesondere kann das Rakel so geformt sein, dass sich eine Berührfläche zwischen Rakel und Pinring über mehrere Pins erstreckt.

Da die Kraftübertragung beim HPRD von Pins 2 mit kreisförmigen Querschnitten übernommen wird und sich diese bei der Bewegung auf der durch den Rotorflansch 4 bestimmten Umlaufbahn geringfügig um ihre Mittelachse drehen, bleibt der Abstand zwischen der tangential anliegenden Fläche am jeweiligem Zahn der Verzahnungen 5, 5' und 6, 6' und der Drehachse des jeweiligen Pins 1 immer konstant.

Somit ist es möglich, die Zahnform unabhängig von der gewählten Pin-Laufbahn so zu konstruieren bzw. zu berechnen, dass alle Pins 1 ständig im Eingriff eines Zahnes mindestens einer der Verzahnungen 5, 5' und 6, 6' sind und das gesamte Drehmoment auf alle Pins 2 verteilt werden kann. Aufgrund dieser Tatsache ist die Flächenpressung an allen Pins 2 und den Verzahnungen 5 und 6 sehr gering. Dies ermöglicht wiederum hohe Wirkungsgrade, geringen Verschleiß, eine sehr große Leistungsdichte und damit eine äußerst kompakte Bauform.

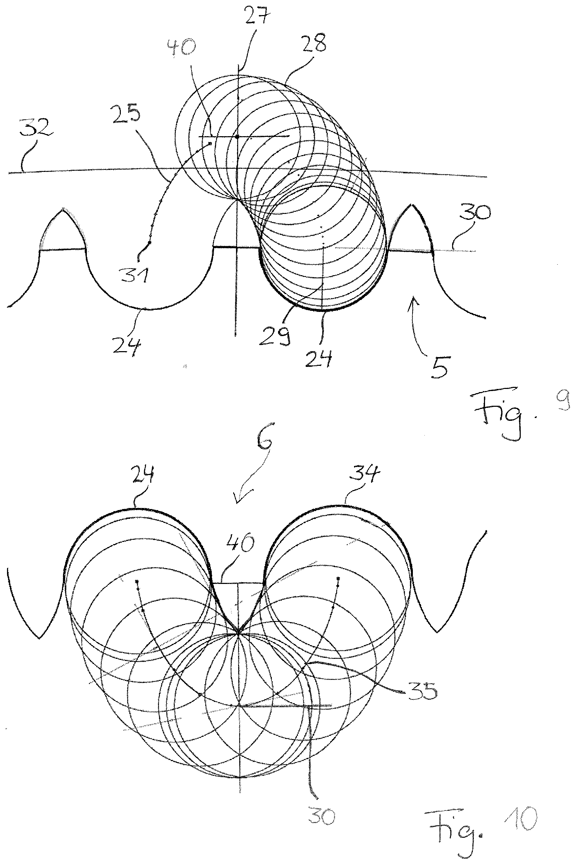

Die Figuren 9 und 10 zeigen eine Ausgestaltung der Zahngeometrien für die innere Verzahnung und die äußere Verzahnung gemäß der Anmeldung.

Die Zahngeometrie ergibt sich aus dem Bewegungsablauf eines Pins 1 in einem Bezugssystem, in dem die Verzahnung in Ruhe ist. Die Zahngeometrie ist die um den Radiuswert des Pins 1 versetzte Kontur 25 des ablaufenden Mittelpunktes des Pins 1, welche, hier am Beispiel der Innenverzahnung 5, 5', im Mittelpunkt eines Zahngrundes 24, startet. Der Mittelpunkt eines Zahngrundes 24 liegt im Schnittpunkt der Symmetrieachse 29 eines Zahngrundes 24 mit dem Teilkreis 30 der inneren Verzahnung 5.

Die Pintrajektorie 25 schneidet auf halbem Wege genau den Teilkreis 40 der äußeren Verzahnung 6, 6' und zugleich die Symmetrielinie 27 des Zahnes, und verläuft wiederum symmetrisch zum bisherigen Verlauf zum Endpunkt, dem Mittelpunkt des benachbarten Zahngrundes 24. Die Zahnform ist durch die innere Hüllkurve des Pinprofils 28 bestimmt. Des Weiteren ist in Fig. 9 ein Kopfkreis 32 der äußeren Verzahnung 6 eingezeichnet, um den Abstand der Zähne zu veranschaulichen.

Figur 10 zeigt die analoge Gestaltung der Zähne der Außenradverzahnung 6. Elemente, die denen in Figur 9 entsprechen, sind mit einer um 10 verschobenen Bezugsziffer gekennzeichnet. Beispielsweise ist die Kontur mit der Bezugsziffer 35 gekennzeichnet.

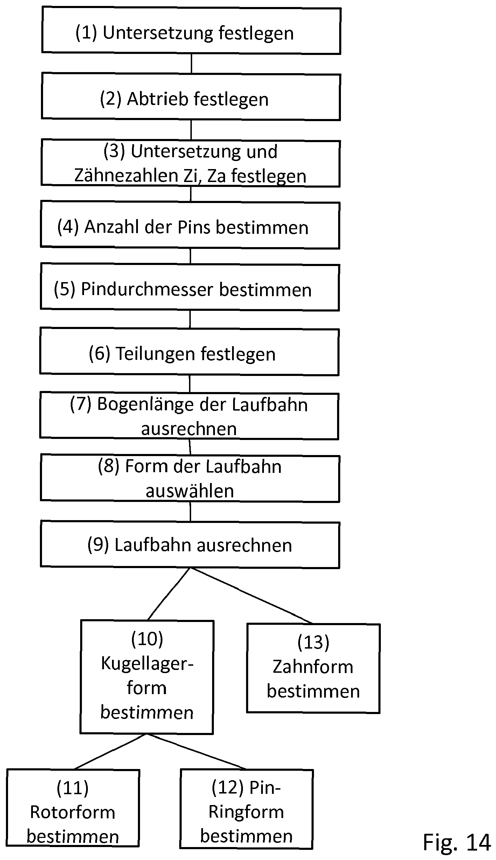

Ein Entwurf eines HPRD weist gemäß der vorliegenden Anmeldung die folgenden Schritte auf, die auch in Fig. 14 gezeigt sind.

1) Festlegung der gewünschten Untersetzung, zum Beispiel 1:36

2) Festlegung der Komponente, welche die Ausgangsdrehzahl erhalten soll

- Auswahl der Außenverzahnung 6, 6'. Es können in diesem Fall wahlweise eine der Verzahnungen 5, 5' oder 6, 6' - bei einem HPRD-MULTI auch der Flexabtrieb 7 - sein.

3) Bestimmung der Zähnezahlen der inneren Verzahnung 5, 5' und der äußeren Verzahnung 6, 6'

- Ergebnis gemäß der Untersetzungsformeln:
  $Z_i = 140$ und $Z_a = 144$

4) Bestimmung der Anzahl der Pins 1

- Ergebnis gemäß der Untersetzungsformeln : 142 Pins 1

5) Festlegung des Durchmessers der Pins 1

- Beispiel Ø2mm

Die Auslegung des Pin-Durchmessers ist maßgebend für die übertragbaren Drehmomente, welche im Gegenzug von der Auswahl der Materialien und Verzahnungsbreiten abhängig sind. Je nach Anforderungen müssen die Dimensionen aller Komponenten im Getriebe ausgelegt und aufeinander abgestimmt werden

6) Festlegung der Teilung der Verzahnungen 5, 5' und 6, 6' sowie des Pin-Halterings

- Beispiel: 2,8mm.

Die Teilung in einem HPRD ist üblicherweise Durchmesser des Pins 1 mal Teilungs-Faktor 1,4 ± 7%, also hier 2mm x 1,4 = 2,8mm. Anzahl und Durchmesser der Pins 1 ergeben in Abhängigkeit der gewählten Teilung eine definierte Länge der Pin-Laufbahn, welche genau zum äußeren Umfang des Kugellagers 2 passen muss.

7) Berechnung der Bogenlänge s der Laufbahn der Pin-Anordnung 1 wie weiter oben beschrieben.

- Berechnung: s = Anzahl Pins (1) * Teilung, s=142 * 2,8 mm = 397,6 mm

8) Festlegung der Laufbahnvariante der Pin-Anordnung 1

- Beispiel: Ellipse

9) Berechnung der Laufbahngeometrie der Pin-Anordnung 1

- Hier ist eine Ellipsengeometrie zu berechnen, deren Halbachsenverhältnis gemäß dem Verhältnis der Zähnezahlen der Verzahnungen 5, 5' und 6, 6' entspricht, und deren Umfang gleich der in 7) errechneten Bogenlänge s = 397,6 mm ist.

Bestimmung der Geometrie der Komponenten. Nach Definition der Laufbahngeometrie lässt sich nun die Geometrie aller weiteren Teile ableiten

10) Geometrie des Kugellagers 2

- Der Umfang des Kugellagers 2 entspricht der inneren Hüllkurve der gleichmäßig auf der errechneten Laufbahngeometrie angeordneten Pins 1. Die weitere Auslegung des Kugellagers 2, insbesondere in Bezug auf Wandstärken und Materialauswahl von Lagerinnen- und Außenring muss so geschehen, dass diese hinsichtlich Elastizität und Wechselbelastung über die geforderte Laufzeit ausreichend stabil sind.

11) Geometrie des Rotors 13

- Die Ausgangsgeometrie am Rotorflansch 4 ist die entsprechend nach innen versetzte Geometrie abhängig vom Querschnitt des Kugellagers 2 und des Durchmessers des Pins - hier beispielsweise die berechnete elliptische Laufbahngeometrie, wobei den Werten der Halbachsen jeweils der Durchmesser der Pins 1 und die Hälfte der Differenz von Außen- und Innendurchmesser des Kugellagers 1 abzuziehen sind.

12) Geometrie des Pin-Halterings 3

- Der Pin-Haltering 3 muss so konstruiert werden, dass er alle Pins 1 ständig tangential am Außenring des Kugellagers 2 und diese gleichmäßig verteilt hält. Die weitere Auslegung des Pin-Halterings 3, insbesondere in Bezug auf Wandstärken und Materialauswahl muss so geschehen, dass diese hinsichtlich Elastizität und Wechselbelastung über die geforderte Laufzeit ausreichend stabil sind.

13) Geometrie der Verzahnungen 5, 5' und 6, 6'

- Die nominalen Zahnformen der Verzahnungen 5, 5' und 6, 6' ergeben sich aus den entsprechenden Hüllkurven nach Abrollen der Pins 1 gemäß obenstehendem Schritt 7).

Aus der Pintrajektorie des einzelnen Pins kann die Zahnform mit Hilfe des Hauptnormalenvektors des begleitenden Dreibeins wie folgt bestimmt werden. Ein Tangentialvektor an die Bahn ist gegeben durch:

$$\frac{d\vec{x}}{ds} = \frac{d\vec{x}}{d\varphi} * \frac{d\varphi}{ds} = \left( r'(\varphi) \begin{pmatrix} \cos(\varphi) \\ \sin(\varphi) \end{pmatrix} + r(\varphi) \begin{pmatrix} -\sin(\varphi) \\ \cos(\varphi) \end{pmatrix} \right) * \frac{d\varphi}{ds}$$

wobei s die Bogenlänge entlang der Bahn bedeutet und wobei für r(φ) die jeweilige Abhängigkeit einzusetzen ist, also zum Beispiel die Gleichung für eine Ellipse oder für eine sinusüberlagerte Kreisform. Ein zum Krümmungsmittelpunkt weisender Normalenvektor $\vec{n}$ auf der Pintrajektorie ist gegeben durch das Kreuzprodukt:

$$\vec{n} = \begin{pmatrix} 0 \\ 0 \\ 1 \end{pmatrix} \times \frac{d\vec{x}}{ds}$$

Dieser Vektor ist auf den Radius des Pins zu normieren und zu einem Punkt der Pintrajektorie zu addieren, um aus einem Punkt der Pintrajektorie einen Punkt auf der Zahngeometrie bzw. auf der inneren Hüllkurve der Pins zu erhalten. Der auf 1 normierte Vektor $\vec{n}$ wird auch als Hauptnormalenvektor der Trajektorie bezeichnet. Die Zahnform ist durch die Endpunkte der Normalenvektoren bestimmt, die auf den Radius der Pins normiert wurden. Diese Endpunkte beschreiben eine Äquidistante der Pintrajektorie im Abstand des Pinradius. Bei Selbstüberschneidungen der Kurve ist der Kurvenabschnitt zu wählen, der am weitesten von der Pintrajektorie entfernt liegt.

Gemäß einer ersten Methode zur Bestimmung des Zahnprofil, die in Fig. 9 und 10 illustriert ist, werden aus der Pintrajektorie Randbedingungen wie zum Beispiel Stützpunkte abgeleitet, um daraus eine Pintrajektorie zu bestimmen. Aus dieser Pintrajektorie kann dann gemäß der Anmeldung die Zahnform, zum Beispiel unter Verwendung des Hauptnormalenvektors, bestimmt werden.

Eine Bestimmung des Zahnprofils gemäß der Anmeldung kann unter Bezug auf die Figuren 9 und 10 wie folgt geschehen. Im Abstand des Teilungswinkels werden halbkreisförmige Zahngründe angeordnet, deren Radius dem Pinradius entspricht. Es werden zwei Stützpunkte durch die Kreismittelpunkte zweier benachbarter Zahngründe bestimmt. Ein weiterer Stützpunkt wird durch den Schnittpunkt der Mittellinie zwischen den benachbarten Zahngründen mit einem Umkreis um die Rotorachse bestimmt, wobei der Umkreis die maximale Auslenkung der Pins markiert.

Durch diese drei Stützpunkte kann zum Beispiel eine Hälfte einer Ellipse, eine Parabel oder ein anderes quadratisches Polynom gelegt werden. Bei Verwendung einer Ellipsenhälfte läuft die Zahnform senkrecht in den Zahngrund, so dass an dieser Stelle kein Knick entsteht. Die lange Achse der Ellipse ist entlang der Symmetrieachse zwischen den benachbarten Zahngründen orientiert, so dass die Stützpunkte den Endpunkten der kleinen Halbachsen und einem Endpunkt einer großen Halbachse entsprechen.

Die in Fig. 9 und 10 gezeigte Zahnform ist insbesondere für Pins geeignet, die so groß sind, dass sich die von den kreisförmigen Querschnitten der Pins überstrichene Spur mit sich selbst überschneidet, wie in Fig. 9 und 10 gezeigt. Dies ist insbesondere der Fall, wenn der Durchmesser der Pins vergleichbar mit dem halben Pinhub ist. Der Pinhub ist in Fig. 9 der Abstand zwischen dem Teilkreis 40 der äußeren Verzahnung und dem Teilkreis 30 der inneren Verzahnung.

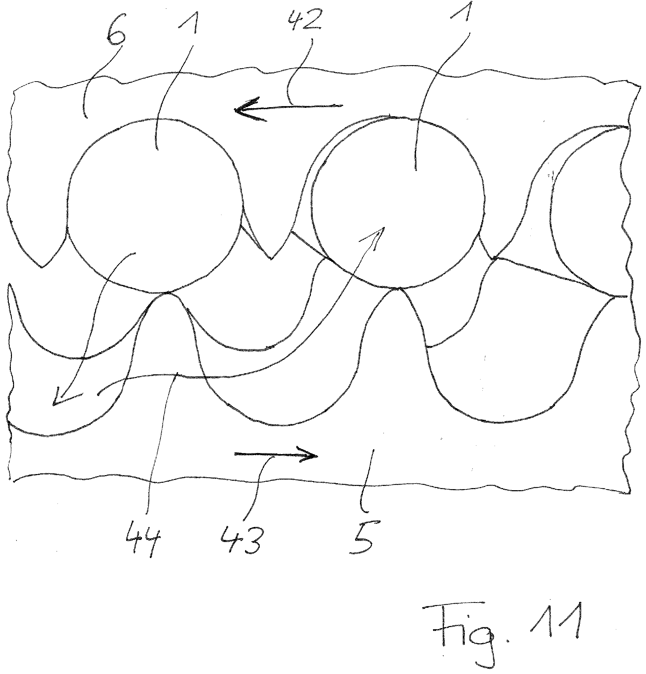

Gemäß der vorliegenden Anmeldung sind die Zähne des Außenrings 6 so dicht beieinander angeordnet, so dass der Abstand von zwei radial gegenüberliegenden Zahngründen ungefähr dem doppelten Umfang der Pins entspricht. Unter anderem dadurch wird erreicht, dass sich alle Pins ständig im Eingriff befinden. Während einer Bewegung eines Pins 1 wird der Pin 1 in einen gegenüberliegenden Zahngrund gedrückt, wenn er sich über der Spitze eines Zahns befindet. Diese Situation ist in Fig. 11 gezeigt. In Fig. 11 ist eine Bewegungsrichtung des Innenrings 5 ist durch einen Pfeil 43, eine Bewegungsrichtung des Außenrings durch einen Pfeil 42 und eine Bewegung eines Pins 1 von Zahngrund zu Zahngrund durch Pfeile 44 schematisch angedeutet.

Gemäß einer weiteren Methode wird die Zahnform quasi experimentell unter Zuhilfenahme eines geeigneten CAD Simulations-Programms bestimmt. Demgemäß wird für die Zahnform oberhalb eins halbkreisförmigen Zahngrundes eine parameterisierte Kurve vorgegeben. Die Parameter dieser Kurve werden dann solange angepasst, bis in der CAD Simulation der größte Abstand eines Pins von der Oberfläche eines Zahns bei der Bewegung von einem Zahngrund zum nächsten einen vorgegebenen Schwellwert, wie zum Beispiel 10 pm, nicht überschreitet. Insbesondere können die Parameter auch so angepasst werden, dass für alle Pins der größte Abstand von einer Oberfläche eines nächstgelegenen Zahns während einer Periode der CAD Simulation einen vorgegebenen Schwellwert, wie zum Beispiel 10 $\mu$m, nicht überschreitet. Somit ist sichergestellt, dass jeder der Pins zu jedem Zeitpunkt mit einem der Zähne in Berührung steht.

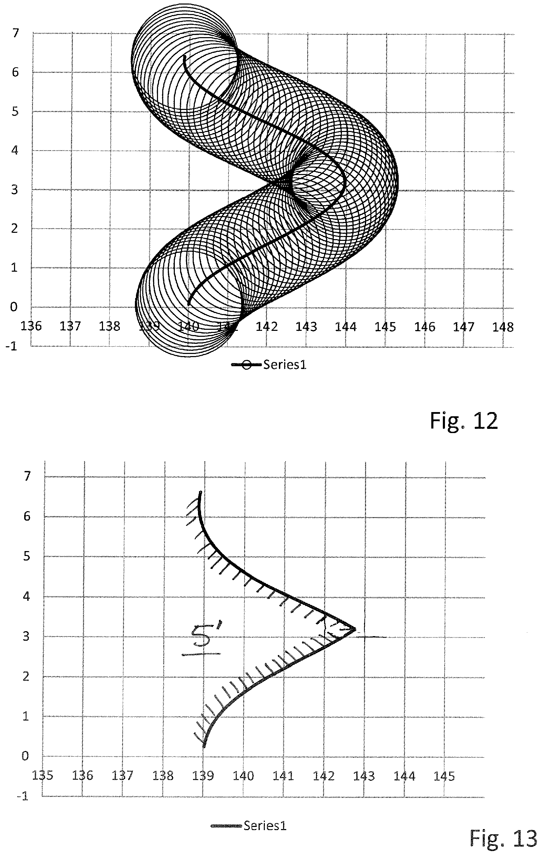

Eine weitere Zahnform erhält man, wenn man eine Randbedingung zu Grunde legt, der zu Folge die Pins sich auf der Pinlaufbahn gleichförmig bewegen, wenn der Antrieb gleichförmig rotiert. Für einen ovalen Transmitter ergibt sich dann eine Pintrajektorie, die in Fig. 12 gezeigt ist und eine Zahnform, die in Fig. 13 gezeigt ist. Ein Bereich eines Innenrings mit dieser Zähnung ist mit 5' bezeichnet. Die Formeln für die ovale und die sinusüberlagerte Pin-Laufbahn sind unten angegeben. Die Radien der Hüllkurven, also die freien Parameter a und b bzw. $r_0 - r_{ep}$ und $r_0 + r_{ep}$ sind gemäß dem Schritt 7) zu bestimmen.

Für die Ellipsenform ergibt sich für den Abstand der Pinlaufbahn vom Mittelpunkt bei einem festen Winkel:

$$r(t) = \frac{b}{\sqrt{1 - \epsilon^2 \sin^2(\omega t - \varphi_0)}}$$

wobei im Argument der Kosinusfunktion der Phasenwinkel steht und $\varepsilon$ die Exzentrizität, also den Quotient b/a bedeutet. Mit $\omega$ ist die Winkelgeschwindigkeit des Rotors 13 bezeichnet. Bei Messung von außen auf den Mittelpunkt zu ist entsprechend r'(t) = $r_0$ - r(t) zu verwenden.

Für die sinusüberlagerte Kreisform ergibt sich:

$$r(t) = r_0 - r_{ep} * \cos(2(\omega t - \varphi_0))$$

Hierbei ist $r_0 - r_{ep}$ der Radius des kleinen Hüllkreises und $r_0 + r_{ep}$ der Radius des großen Hüllkreises. Die sinusüberlagerte Kreisform erhält man auch durch eine Taylorentwicklung der Ellipsengleichung nach dem Quadrat der Exzentrizität bis zur ersten Potenz. Daraus erhält man:

$$r(t) = b * \left( 1 + \frac{\epsilon^2}{4} \sin^2(\omega t - \varphi) \right) = b * \left( 1 + \frac{\epsilon^2}{8} - \frac{\epsilon^2}{8} \cos(2\omega t - \varphi) \right)$$

Entwicklungen der Ellipsengleichung bis zu höheren Potenzen sind ebenfalls geeignet, eine Transmitterform gemäß der Anmeldung festzulegen.

Die Trajektorie der Pins in Polarkoordinatendarstellung ergibt sich nun aus folgender Überlegung. Wenn t die Werte 0 bis T durchläuft, wobei T die Umlaufperiode des Rotors 13 ist, ergibt sich aus r(t) die Pinlaufbahn. Ein Pin 1 wandert innerhalb eines halben Umlaufs des Rotors 13 von einem Zahngrund in den nächsten. Also durchläuft t innerhalb des Teilungswinkels die Werte 0 bis T/2.

Die Winkelgeschwindigkeit der Pins ist in guter Näherung konstant. Für eine noch genauere Näherung ist ein sinusförmig oszillierender Korrekturterm in der Winkelgeschwindigkeit zu berücksichtigen, der aber bei den oben betrachteten Zähnezahlverhältnissen nur wenige Prozent ausmacht. Mit dem Teilungswinkel ($\varphi_T = 2\pi/Z$, wobei Z die Anzahl der Zähne ist, ergibt sich $\varphi(t) = t/(T/2) * \varphi_T$ und somit $t(\varphi) = \varphi * T/2\varphi_T$.

Wenn r(t) durch eine Funktion $f(\omega t - \varphi_0)$ bestimmt ist, ergibt sich die Pintrajektorie $r(\varphi)$ eines einzelnen Pins als

$$r(\varphi) = f\left( \omega * \varphi * \frac{T}{2\varphi_T} - \varphi_0 \right) = f\left( \varphi * \frac{Z}{2} - \varphi_0 \right)$$

bzw. mit $\varphi_0 = 0$ als eine um den Faktor Z/2 gestauchte Pinlaufbahn.

Ein Teil dieser Pintrajektorie sowie die zugehörige Bewegung der Pins ist in Figur 11 für eine elliptische Transmitterform gezeigt. Für Figur 12 wurde die Hüllkurve der Pins mit Hilfe des Hauptnormalenvektors numerisch ausgerechnet. Diese Hüllkurve legt die Zahngeometrie fest. Die Längeneinheiten in Fig. 11 und 12 sind in willkürlichen Einheiten aber für beide Achsen gleich gewählt. In diesen Einheiten ist der Pinradius für Fig. 12 größer als eins und für Fig. 13 gleich eins gewählt.

Wegen der gewählten Größe der Pins ergibt sich auch gemäß dieser Methode eine spitze Zahnform, jedoch haben die Flanken des Zahngrundes eine geringere Steigung als 90 Grad.

**Bezugsziffern**

| | |
|---|---|
| 1 | Pins |
| 2 | Dünnring-Kugellager |
| 3 | Pin-Haltering |
| 4 | Rotor-Flansch, Transmitter |
| 5 | innere Verzahnung |
| 5' | innere Verzahnung |
| 6 | äußere Verzahnung |
| 6' | äußere Verzahnung |
| 7 | Innenring |
| 7' | Innenring |
| 8 | Außenring |
| 8' | Außenring |
| 9 | zylindrisches Gehäuseteil |
| 10 | HPRD Getriebe |
| 11 | kleine Achse |
| 12 | große Achse |
| 13 | Rotor |
| 14 | flexibler Innenring |
| 15 | Umlenkrolle |
| 15' | Umlenkrolle |
| 16 | Kugellager |
| 17 | Kugellager |
| 18 | Scheibe, Innenring |
| 19 | Stellschlitze |
| 20 | innerer Berührbereich |

21    äußerer Berührbereich
22    Zwischenbereich
23    flexibler Außenring
24    Zahngrund
25    Pintrajektorie
26    Kugeln
27    Symmetrielinie des Zahnes
28    Pinprofil
29    Symmetrieachse des Zahngrunds
30    Teilkreis der inneren Verzahnung
32    Kopfkreis der äußeren Verzahnung
34    Zahngrund der äußeren Verzahnung
35    Pintrajektorie
40    Teilkreis der äußeren Verzahnung
41    Aufnahmerille
42    Bewegung des Außenrings
43    Bewegung des Innenrings
44    Bewegung des Pins

## Patentansprüche

**1.** Harmonic-Pin-Ring Getriebe (10) mit Hohlwellenbauform, das aufweist

- mindestens einen Innenring (7, 7') mit Außenverzahnung (5, 5') und
- mindestens einen Außenring (8, 8') mit Innenverzahnung (6' 6')'
- einen Pin-Ring (3) mit Pins (1), die einen kreisförmigen Querschnitt aufweisen,
- einen als Hohlwelle ausgebildeten Rotor (13) mit einem Transmitter (4, 18) zum Rakeln der Pins (1) des Pin-Rings (3) in die Zähne des Außenrings (8, 8') und in die Zähne des Innenrings (7, 7')', wobei der Transmitter (4, 18) als ein Flansch (4) des Rotors (13) ausgebildet ist, wobei der Innenring (7, 7'), der Rotor (13) und der Außenring (8, 8') konzentrisch zueinander angeordnet sind, der Transmitter (4, 18) innerhalb des Pinrings (3) angeordnet ist, und wobei der Pinring (3) zwischen dem Innenring (7, 7') und dem Außenring (8, 8') angeordnet ist, wobei der Transmitter (4, 18) den Pinring (3) so verformt, dass sich der Außenring (8, 8') und der Innenring (7, 7') relativ zueinander drehen,
wobei ferner die Form der Zähne des Außenrings (8, 8') und die Form der Zähne des Innenrings (7, 7') im Wesentlichen durch die Hüllkurve der sich dabei bewegenden Pins (1) festgelegt ist und wobei jeder der Pins (1) im Eingriff mit der Innenverzahnung (6, 6') des Außenrings (8, 8') oder im Eingriff mit der Außenverzahnung (5, 5') des Innenrings (7, 7') ist und wobei jeder Pin (1) zu jedem Zeitpunkt mit einem Zahn der Innenverzahnung (6, 6') oder mit einem Zahn der Außenverzahnung (5, 5') in Berührung ist, wobei ein Abstand von zwei radial gegenüberliegenden Zahngründen (24, 34) ungefähr einem doppelten Umfang der Pins (1) entspricht.

**2.** Harmonic-Pin-Ring Getriebe (10) gemäß Anspruch 1, wobei der Scheitelpunkt eines Pin-Mittelpunkts eines Pins (1) bei der Bewegung des Pins (1) von einem Zahngrund (24, 34) in einen benachbarten Zahngrund (24, 34) einer Zähnung (5, 5'; 6, 6') des Innen- oder Außenrings (7, 7'; 8, 8') auf einem Teilkreis der jeweils gegenüberliegenden Zähnung (6, 6'; 5, 5') liegt.

**3.** Harmonic-Pin-Ring Getriebe (10) gemäß Anspruch 2, wobei der Querschnitt der Zahngründe (24, 34) die Form eines Kreisausschnitts hat.

**4.** Harmonic-Pin-Ring Getriebe (10) gemäß einem der vorhergehenden Ansprüche, wobei die Zahnflanken senkrecht zum Teilkreis der jeweiligen Zähnung (5, 5'; 6, 6') in den Zahngrund (24, 34) einlaufen.

**5.** Harmonic-Pin-Ring Getriebe (10) gemäß Anspruch 1, wobei die Pin-Trajektorie (25, 35) eines Pin-Mittelpunkts eines Pins (1) bei der Bewegung des Pins (1) von einem Zahngrund (24, 34) in einen benachbarten Zahngrund (24, 34) durch einen Ellipsenabschnitt gegeben ist.

**6.** Harmonic-Pin-Ring Getriebe (10) gemäß Anspruch 1, wobei die Pin-Trajektorie (25, 35) eines Pin-Mittelpunkts eines Pins (1) bei der Bewegung des Pins (1) von einem Zahngrund (24, 34) in einen benachbarten Zahngrund (24, 34) durch einen Ausschnitt einer sinusüberlagerten Kreisform gegeben ist.

7. Harmonic-Pin-Ring Getriebe (10) gemäß Anspruch 1, wobei die Pintrajektorie (25, 35) eines Pin-Mittelpunkts eines Pins (1) bei der Bewegung des Pins (1) von einem Zahngrund (24, 34) in einen benachbarten Zahngrund (24, 34) im Wesentlichen durch eine entlang einer Winkelkoordinate gestauchte Form des Transmitters (4, 18) gegeben ist.

8. Harmonic-Pin-Ring Getriebe (10) gemäß einem der vorhergehenden Ansprüche, wobei der Fußkreis der Zähne des Innenrings (7, 7') von dem Fußkreis der Zähne des Außenrings (8, 8') im Wesentlichen um den doppelten Umfang der Pins (1) entfernt ist.

**Claims**

1. Harmonic pin ring transmission (10) with hollow shaft configuration, comprising

   - at least one inner ring (7, 7') with external toothing (5, 5') and
   - at least one outer ring (8, 8') with internal toothing (6' 6')'
   - a pin ring (3) with pins (1) comprising a circular cross-section,
   - a rotor (13) configured as a hollow shaft with a transmitter (4, 18) for drawing the pins (1) of the pin ring (3) into the teeth of the outer ring (8, 8') and into the teeth of the inner ring (7, 7')', wherein the transmitter (4, 18) is configured as a flange (4) of the rotor (13), wherein the inner ring (7, 7'), the rotor (13) and the outer ring (8, 8') are arranged concentrically to one another, the transmitter (4, 18) is arranged inside the pin ring (3), and wherein the pin ring (3) is arranged between the inner ring (7, 7') and the outer ring (8, 8'), wherein the transmitter (4, 18) deforms the pin ring (3) such that the outer ring (8, 8') and the inner ring (7, 7') rotate relative to each other, wherein furthermore the shape of the teeth of the outer ring (8, 8') and the shape of the teeth of the inner ring (7, 7') are substantially determined by the envelope of the pins (1) which move and wherein each of the pins (1) is in engagement with the internal toothing (6, 6') of the outer ring (8, 8') or in engagement with the external toothing (5, 5') of the inner ring (7, 7') and wherein each pin (1) is in contact with a tooth of the internal toothing (6, 6') or with a tooth of the external toothing (5, 5') at any point in time, wherein a distance of two radially opposite tooth bases (24, 34) corresponds approximately to twice the circumference of the pins (1) .

2. Harmonic pin ring transmission (10) according to claim 1, wherein the apex of a pin centre of a pin (1) during the movement of the pin (1) from one tooth base (24, 34) into an adjacent tooth base (24, 34) of a toothing (5, 5'; 6, 6') of the inner or outer ring (7, 7'; 8, 8') lies on a pitch circle of the respective opposite toothing (6, 6'; 5, 5').

3. Harmonic pin ring transmission (10) according to claim 2, wherein the cross-section of the tooth bases (24, 34) has the shape of a sector of a circle.

4. Harmonic pin ring transmission (10) according to any one of the preceding claims, wherein the tooth flanks enter the tooth base (24, 34) perpendicularly to the pitch circle of the respective toothing (5, 5'; 6, 6').

5. Harmonic pin ring transmission (10) according to claim 1, wherein the pin trajectory (25, 35) of a pin centre of a pin (1) during the movement of the pin (1) from one tooth base (24, 34) into an adjacent tooth base (24, 34) is given by a section of an ellipse.

6. Harmonic pin ring transmission (10) according to claim 1, wherein the pin trajectory (25, 35) of a pin centre of a pin (1) during the movement of the pin (1) from one tooth base (24, 34) into an adjacent tooth base (24, 34) is given by a sector of a sinusoidal superimposed circular shape.

7. Harmonic pin ring transmission (10) according to claim 1, wherein the pin trajectory (25, 35) of a pin centre of a pin (1) during the movement of the pin (1) from one tooth base (24, 34) into an adjacent tooth base (24, 34) is substantially given by a shape of the transmitter (4, 18) compressed along an angular coordinate.

8. Harmonic pin ring transmission (10) according to any one of the preceding claims, wherein the root circle of the teeth of the inner ring (7, 7') is spaced from the root circle of the teeth of the outer ring (8, 8') by substantially twice the circumference of the pins (1).

**Revendications**

1.  Engrenage harmonique à bague de broche (10) ayant une forme d'arbre creux, comportant

    - au moins une bague intérieure (7, 7') avec une denture extérieure (5, 5') et
    - au moins une bague extérieure (8, 8') avec une denture intérieure (6' 6')'
    - une bague de broches (3) avec des broches (1) qui comportent une section transversale circulaire,
    - un rotor (13) réalisé sous forme d'arbre creux avec un transmetteur (4, 18) pour racler les broches (1) de la bague de broches (3) dans les dents de la bague extérieure (8, 8') et dans les dents de la bague intérieure (7, 7')', le transmetteur (4, 18) étant réalisé sous forme d'un flasque (4) du rotor (13), dans lequel la bague intérieure (7, 7'), le rotor (13) et la bague extérieure (8, 8') sont disposés de manière concentrique l'un par rapport à l'autre, le transmetteur (4, 18) est disposé à l'intérieur de la bague de broches (3), et dans lequel la bague de broches (3) est disposée entre la bague intérieure (7, 7') et la bague extérieure (8, 8'), dans lequel le transmetteur (4, 18) déforme la bague de broches (3) de telle sorte que la bague extérieure (8, 8') et la bague intérieure (7, 7') tournent l'une par rapport à l'autre,
    dans lequel, en outre, la forme des dents de la bague extérieure (8, 8') et la forme des dents de la bague intérieure (7, 7') sont essentiellement déterminées par l'enveloppe des broches (1) qui se déplacent, et dans lequel chacune des broches (1) est engrenée avec la denture intérieure (6, 6') de la bague extérieure (8, 8') ou est engrenée avec la denture extérieure (5, 5') de la bague intérieure (7, 7') et dans lequel chaque broche (1) est à tout moment en contact avec une dent de la denture intérieure (6, 6') ou avec une dent de la denture extérieure (5, 5'), dans lequel une distance entre deux fonds de dent (24, 34) radialement opposés correspond à environ deux fois la circonférence des broches (1).

2.  Engrenage harmonique à bague de broche (10) selon la revendication 1, dans lequel le sommet d'un centre de broche d'une broche (1) lors du déplacement de la broche (1) d'un fond de dent (24, 34) à un fond de dent adjacent (24, 34) d'une denture (5, 5'; 6, 6') de la bague intérieure ou extérieure (7, 7'; 8, 8') se trouve sur un cercle primitif de la denture respectivement opposée (6, 6'; 5, 5').

3.  Engrenage harmonique à bague de broche (10) selon la revendication 2, dans lequel la section transversale des fonds de dent (24, 34) a la forme d'un secteur circulaire.

4.  Engrenage harmonique à bague de broche (10) selon l'une quelconque des revendications précédentes, dans lequel les flancs des dents entrent dans le fond de dent (24, 34) perpendiculairement au cercle primitif de la denture respective (5, 5'; 6, 6').

5.  Engrenage harmonique à bague de broche (10) selon la revendication 1, dans lequel la trajectoire de broche (25, 35) d'un centre de broche d'une broche (1) lors du déplacement de la broche (1) d'un fond de dent (24, 34) à un fond de dent adjacent (24, 34) est donnée par une section d'ellipse.

6.  Engrenage harmonique à bague de broche (10) selon la revendication 1, dans lequel la trajectoire de broche (25, 35) d'un centre de broche d'une broche (1) lors du déplacement de la broche (1) d'un fond de dent (24, 34) à un fond de dent adjacent (24, 34) est donnée par un secteur d'une forme circulaire à superposition sinusoïdale.

7.  Engrenage harmonique à bague de broche (10) selon la revendication 1, dans lequel la trajectoire de broche (25, 35) d'un centre de broche d'une broche (1) lors du déplacement de la broche (1) d'un fond de dent (24, 34) à un fond de dent adjacent (24, 34) est essentiellement donnée par une forme du transmetteur (4, 18) comprimée le long d'une coordonnée angulaire.

8.  Engrenage harmonique à bague de broche (10) selon l'une quelconque des revendications précédentes, dans lequel le cercle de pied des dents de la bague intérieure (7, 7') est éloigné du cercle de pied des dents de la bague extérieure (8, 8') sensiblement du double de la circonférence des broches (1).

Fig. 1

A-A ( 1 : 1 )

Fig. 3

Fig. 2

Fig. 4

Fig. 5

Fig. 6

Fig. 7

Fig. 8

Fig. 9

Fig. 10

Fig. 11

Fig. 12

Fig. 13

(1) Untersetzung festlegen

(2) Abtrieb festlegen

(3) Untersetzung und Zähnezahlen Zi, Za festlegen

(4) Anzahl der Pins bestimmen

(5) Pindurchmesser bestimmen

(6) Teilungen festlegen

(7) Bogenlänge der Laufbahn ausrechnen

(8) Form der Laufbahn auswählen

(9) Laufbahn ausrechnen

(10) Kugellager- form bestimmen

(13) Zahnform bestimmen

(11) Rotorform bestimmen

(12) Pin- Ringform bestimmen

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090139358 A
- WO 2012046261 A
- DE 1750279 A
- US 2210240 A